# EUROPEAN PATENT APPLICATION

(11) **EP 1 677 007 A2**
(43) Date of publication of application: **05.07.2006**
(21) Application number: 05381061.0
(22) Date of filing: 21.12.2005
(51) Int. Cl.: F03D 11/04, F03D 1/00

(54) **Wind turbine with detachable crane and auxiliary boom and crane assembly procedure**

(30) Priority: 21.12.2004 ES 200403040
(71) Applicant: Gamesa Eolica, S.A. (Sociedad Unipersonal), 31013 Pamplona (Navarra) (ES)
(72) Inventor: José Ignacio, Llorente González, 31013, Pamplona (ES); Jesús, Zaldua Lasa, 31013, Pamplona (ES)

(57) **Abstract**

Wind turbine with a detachable, articulated boom-type crane which is anchored at the end (99) of the frame (97) close to the rotor (94) and its boom (86) is sized to be able to cover the entire surface of the nacelle, the crane support (50) includes a turning device to allow for movements of this type required to assemble / dismantle the blades (95) of the rotor (94), the gearbox (92), the generator (93) or the transformer (96), having all the crane components mounted on the nacelle (80) low weigh. The crane is mounted by the assistance of a detachable auxiliary boom (2) which is mounted on the overhead crane (1) of the wind turbine so that it can move lengthways along it.

## Description

**FIELD OF THE INVENTION**

This invention refers to a wind turbine with a boom-type crane for maintenance work on its components and the assembly procedure for said crane on this type of wind turbine.

**BACKGROUND TO THE INVENTION**

Wind turbines are sized to ensure their main components have a long working life, which means that regular maintenance work on the parts subject to greatest wear and tear must be carried out. Some of these components, particularly the generator, the gearbox the rotor blade and the transformer, are extremely heavy and therefore require the use of a crane for handling.

Bearing in mind the strict limitations regarding maintenance work, given that wind turbines are installed in tall towers and are, in general, built in solitary areas, the use of commercial cranes leads to problems of availability and cost.

Therefore, wind generators are now fitted with their own cranes to carry out maintenance work on their heavier components, without the need for external resources. Hence, a certain amount of background knowledge is available, as indicated below.

The maintenance crane indicated in document NL 1014553 is assembled on the outer casing of the wind turbine nacelle and leads to the problem of the need for work on the casing prior to assembly. Furthermore, the base of this crane does not turn and, therefore, is limited in terms of manoeuvrability and the scope of the parts to be replaced.

The crane described in document ES 2143652 is not able to turn around its vertical axis by merely changing the layout of its parts to cover a greater length and, therefore, is only used to change the wind turbine blades as it lacks the capability to handle any other part.

The crane in document EP 1101934 requires work on the base of the wind turbine nacelle where it is to be assembled to prevent it from colliding when moving.

The crane in document DE 19647515 is not able to turn on its base and, therefore, must move along the wind turbine structure to lift the different parts. This complicates manoeuvrability as in the case of the crane developed in document DE 19741988, which must be assisted by a pulley system to position its hook.

**SUMMARY OF THE INVENTION**

This invention refers to a conventional, high power wind turbine with an articulated boom-type crane to handle its heavier parts located inside the nacelle and, more particularly, the rotor made up of the blades and the hub (the component that turns the wind power into a turning movement of the main wind turbine shaft), the generator (the component that turns this turning movement into electricity), the gearbox (a component responsible for multiplying the revs of the main wind turbine shaft for greater generator supply) and the transformer.

The wind turbine nacelle, supported by a tower, is based on a frame that supports these parts and an overhead crane located over them.

The crane is made up of a support, a boom, a mast, a boom lifting drum, a pulley device and cables to adjust boom hoisting, a load lifting / lowering device driven by a motor unit located at the base of the tower.

According to the invention, the crane is anchored to the end of the frame close to the rotor and its boom is large enough to cover the entire surface of the nacelle. The crane support includes a turning device to allow for movements of this type required to assemble / dismantle the rotor blades, the gearbox, the generator or the transformer and all crane components fitted on the nacelle weigh less than 700 Kg.

According to the invention, the wind turbine also includes a detachable auxiliary boom to lift and lower all crane components assembled on the nacelle. This is mounted on the overhead crane so that it can move lengthways over it.

This invention is particularly aimed at wind turbines generating a power of around 2 Mw.

An important characteristic of the invention is that all the crane components mounted on the nacelle weigh less than 750 Kg, so that they can be hoisted using the maintenance boom that forms part of this invention.

This invention also refers to the assembly procedure and operations for this maintenance crane on a conventional, high power wind turbine.

Other characteristics and advantages of this invention are indicated in the detailed description following the illustrations of its purpose in relation to the attached figures.

**DESCRIPTION OF THE FIGURES**

Figure 1 shows a diagram of how the auxiliary boom is fitted according to the invention for assembly of the wind turbine maintenance crane.

Figure 2 shows a basic configuration of the auxiliary boom according to the invention for the assembly of the wind turbine maintenance crane.

Figure 3 shows the minimum scope and height preferred for the auxiliary boom according to the invention for the assembly of the wind turbine maintenance crane.

Figure 4 shows the pulling system for the auxiliary boom according to the invention for the assembly of the wind turbine maintenance crane.

Figure 5 shows the support reinforcement system for the auxiliary boom according to the invention for the assembly of the wind turbine maintenance crane.

Figure 6 shows the assembly of the maintenance crane base on the frame of the wind turbine nacelle.

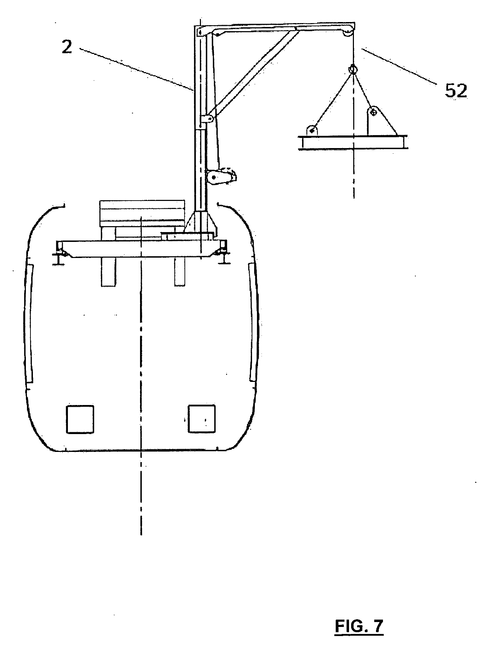

Figure 7 shows the mast base lifting process.

Figure 8 shows a base turning system and the assembly parts of the wind turbine maintenance crane.

Figure 9 shows the lifting system for the boom on the wind turbine maintenance crane.

Figure 10 shows the sequence of operations for hoisting the boom on the wind turbine maintenance crane.

Figure 11 shows the layout of the return system for hoisting the boom on the wind turbine maintenance crane.

Figure 12 shows the assembly of the first part of the boom on the wind turbine maintenance crane.

Figure 13 shows the assembly of the second part of the boom on the wind turbine maintenance crane.

Figure 14 shows the assembly of the pulling cable for the boom on the wind turbine maintenance crane.

Figure 15 shows the assembly of the load lifting system on the wind turbine maintenance crane.

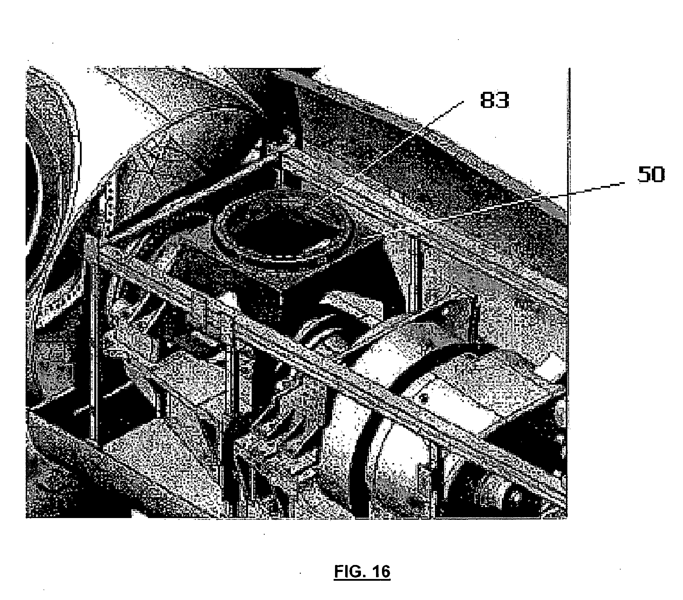

Figure 16 shows the position of the crown on the base turning system for the wind turbine maintenance crane.

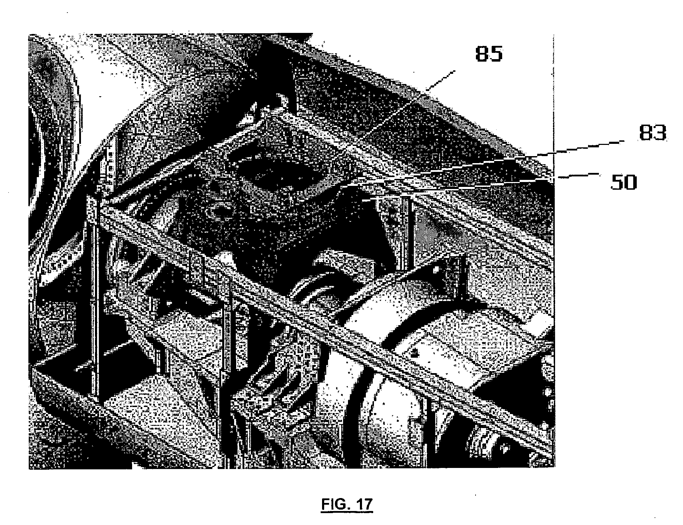

Figure 17 shows the position of the platform on the base turning system for the wind turbine maintenance crane.

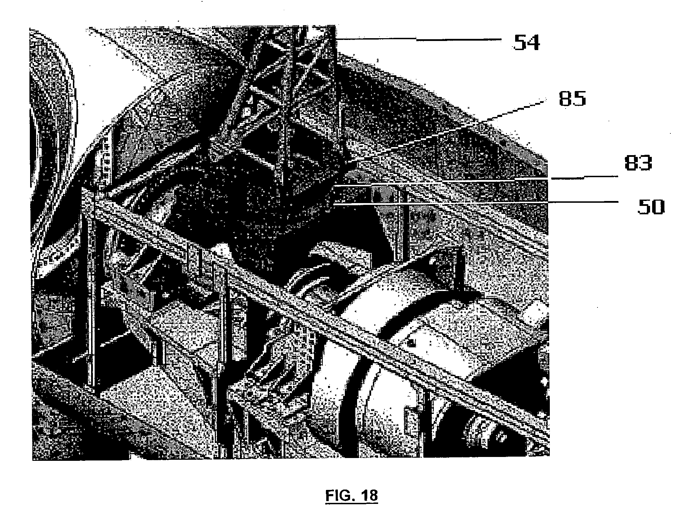

Figure 18 shows the position of the pulling pillar for the wind turbine maintenance crane.

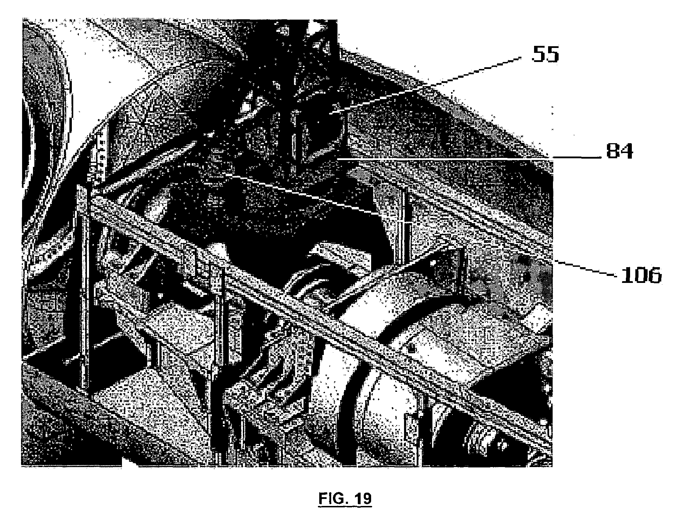

Figure 19 shows the assembly of the auxiliary systems for the turning system and the pulling cable return system on the wind turbine maintenance crane.

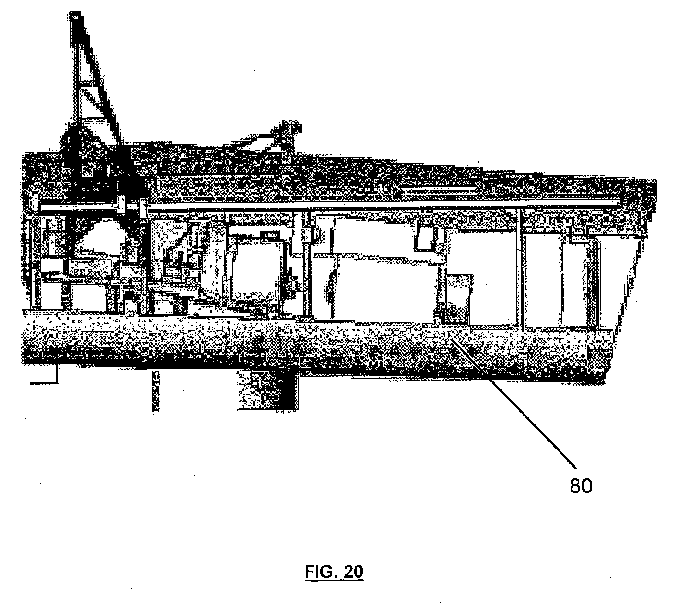

Figure 20 shows the position of the first part of the boom on the wind turbine maintenance crane.

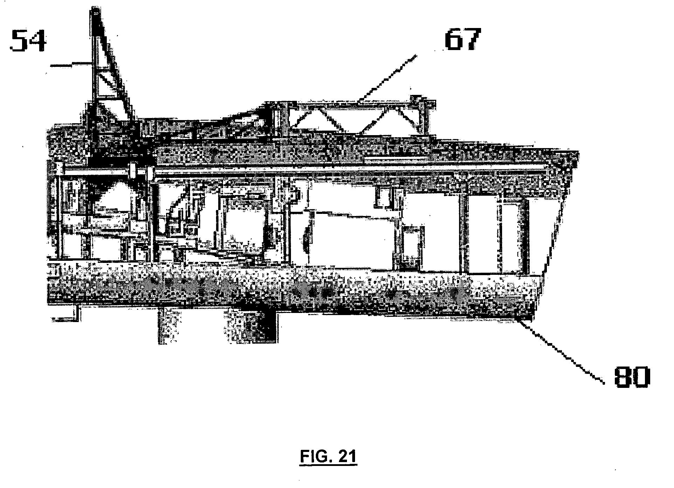

Figure 21 shows the position of the second part of the boom on the wind turbine maintenance crane.

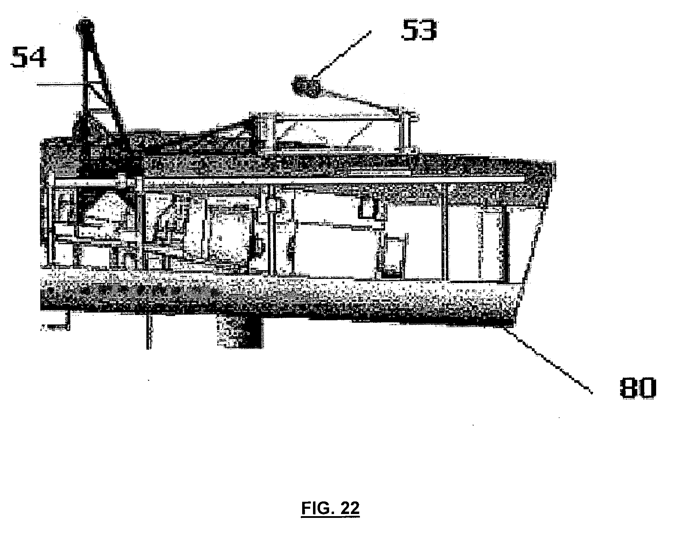

Figure 22 shows the assembly of the pulling system for the wind turbine maintenance crane.

**DETAILED DESCRIPTION OF THE INVENTION**

For a clearer idea of the invention, below is a description of the auxiliary boom and the crane included in the wind turbine in this invention in terms of their assembly processes. This will lead to greater understanding of the removable nature of both devices and the configuration of their components, in line with this design, to provide maintenance on the heavier components of the wind turbine.

**Auxiliary boom**

In order to assemble the crane for carrying out maintenance work on the main parts of the wind turbine on the nacelle 80, an auxiliary lifting system is required that is capable of handling the parts forming this crane on top of the nacelle 80 and along the wind turbine plant. This invention provides an auxiliary boom 2 capable of providing the load capacity, the scope and the height over the nacelle 80 that are necessary to allow for assembly of the maintenance crane.

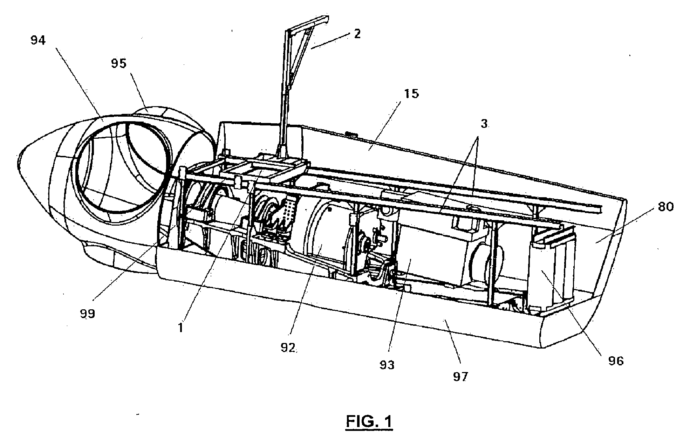

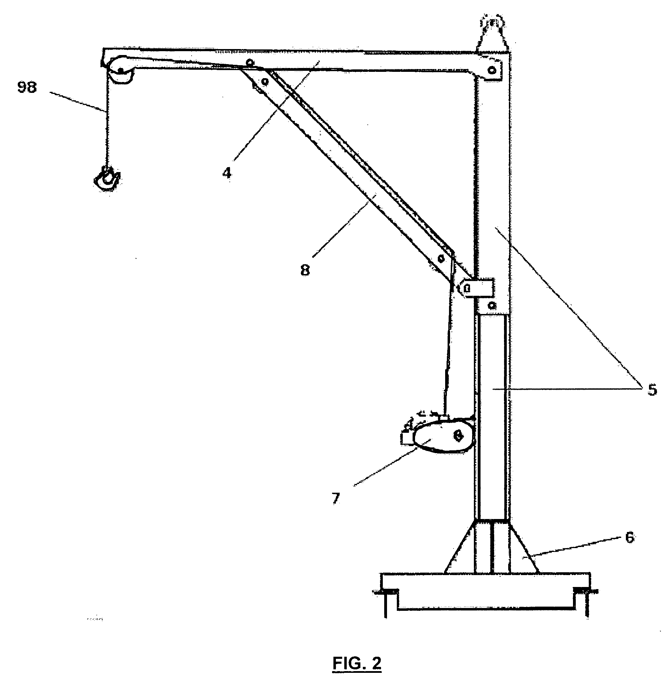

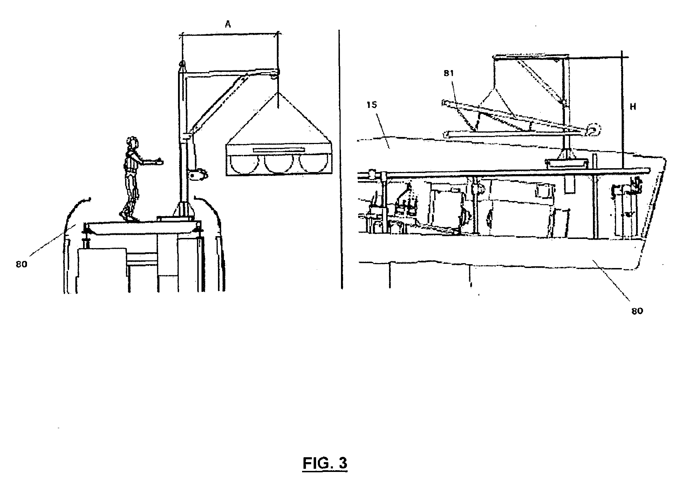

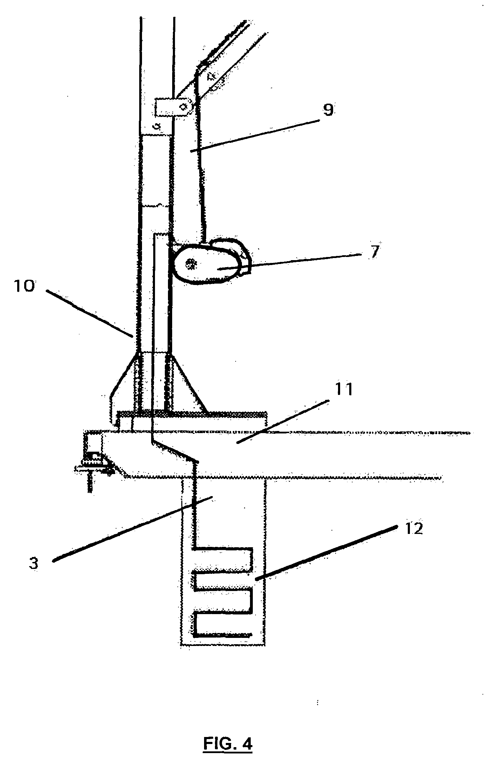

As can be seen by Figures 1 to 5, the overhead crane 1 is used as a platform to assemble the auxiliary boom 2, allowing the roof of the nacelle 80 casing 15 to be lowered onto the ground and for the maintenance crane components to be lifted to their final site above the rail girders 3 on the overhead crane 1.

The auxiliary boom 2 consists of a detachable beam 4 assembled using a tie 8 on a divisible column 5, which is assembled in two parts and that turns on the base 6 of the boom using a bearing (not shown). The inverted chain hoist 7 on the overhead crane 1 of the nacelle 80 carries out the pulling action.

The base 6 of the boom 2 is secured to the girders 3 of the overhead crane 1 so that, as well as turning the boom 2, the lengthways movement of the overhead crane 1 can be used without any sideways movement.

On the boom 2 in this invention, the casing 15 of the nacelle 80 limits its scope A, while the mast 81 of the maintenance crane defines the height H of the boom. Preferably in this invention, the scope of the boom to be able to remove the casing from the nacelle to outside the plant is 2100 mm, whereas its height to easily lift the pieces of maintenance crane and its mast is 3000 mm.

The boom 2 in the invention is preferably built using structural steel profiles.

The boom 2 is pulled by a chain hoist 7 located on the nacelle 80. The no-load return chain 10 is guided on the inside of the nacelle column 5, whereas the loaded pulling chain 9 passes on the outside.

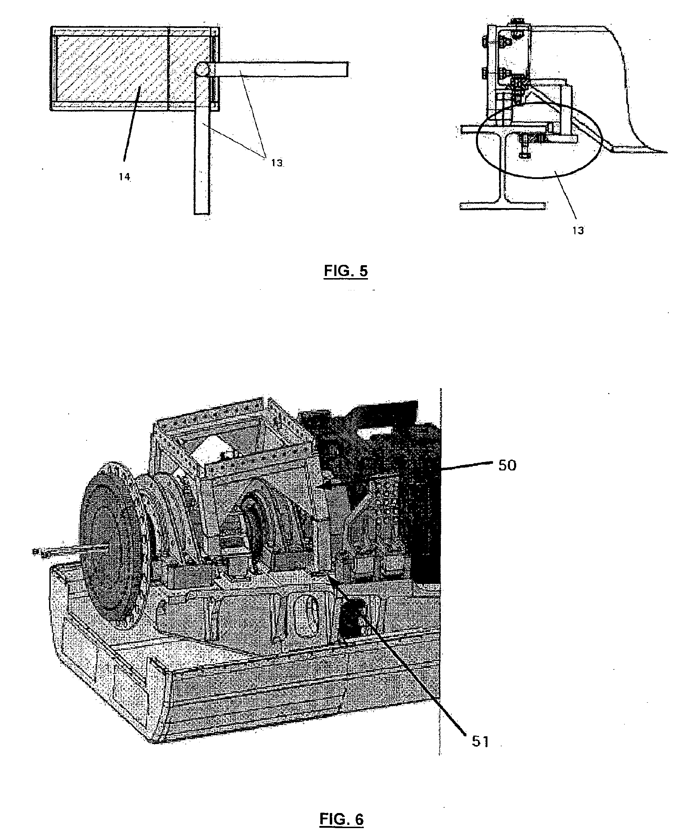

The base of the boom 2 is preferably assembled on the trolley 11 of the overhead crane 1, as this makes chain guiding easier given that the chain bag 12 already exists. Once the boom 2 has been mounted, a check must be made to ensure the stress transmitted by it to the trolley 11 does not cause the structure to tip. Therefore, before using the boom 2, the overhead crane guide rail must be strengthened, as indicated in Figure 5, using roller levers 13 and support polygon 14 so that the upwards stress generated due to the tipping movements can be absorbed.

**Maintenance crane**

The maintenance crane is of the articulated boom-type type, preferably with a maximum scope of 8 m and a minimum scope of 1.5 m, assembled using the auxiliary boom in the following stages:
- assembly of the maintenance crane base
- assembly of the maintenance crane turning system
- assembly of the maintenance crane boom lifting system
- assembly of the maintenance crane base and
- assembly of the maintenance crane load lifting system.

The base 50 of the maintenance crane will be assembled using the boom 2, which is fitted to the rear of the nacelle 80 and that lifts the base 50 and turns it to free it from the casing 15 (which must have been previously removed). When the base 50 is on the nacelle 80, the overhead crane 1 is pushed until the base 50 is fitted on legs 51, to which it is bolted.

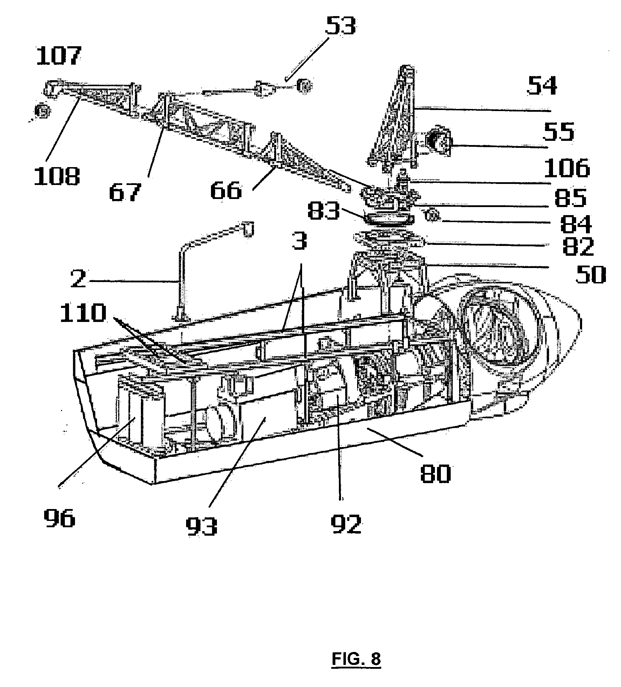

The turning system of the maintenance crane rests on the aforementioned base 50 and consists of the several parts: support / crown adaptor 82, bearing with crown 83, guide pulley 84, turning platform 85 and geared motor and brake unit 106, which is hoisted up using the boom 2. The turning platform 85 is mounted on the bearing with crown 83, which is driven by the geared motor 106. The boom 2 is also fitted to the rear of the nacelle 80 so that it does not interfere with the casing 15 while it moves. The assembly of these turning system elements is indicated in Figure 8:
- the support / crown adaptor 82 is lifted using the boom 2 and bolted to the crane base 50,
- the bearing with crown 83 is mounted onto the support / crown adaptor 82 using the boom 2 and two bolts,
- the geared motor 106 is lifted using the boom 2 and is mounted on the support / crown adaptor 82, meshing with the bearing with crown 83,
- the turning platform 85, attached to the bearing with crown 83, on which the boom lifting system and the crane boom 86 is mounted is assembled turned to an angle of 180°.

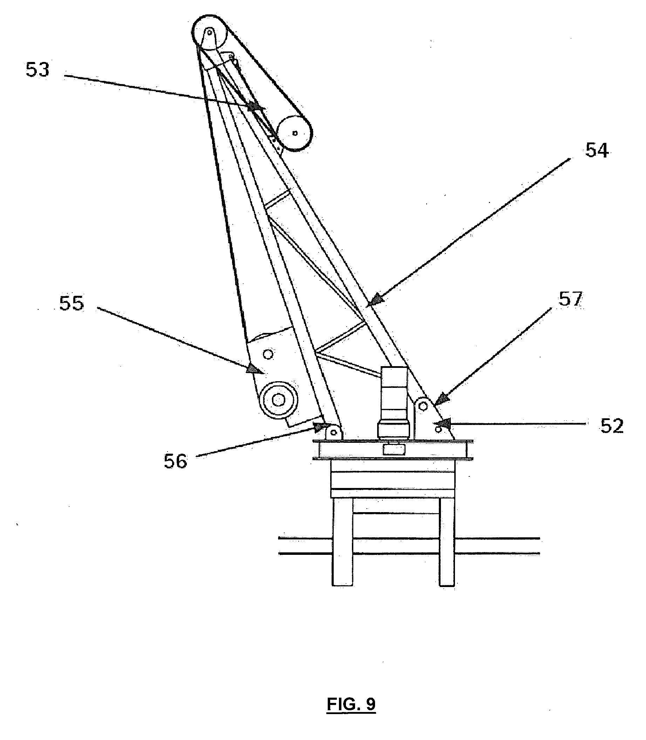

Figure 9 shows the lifting system for the boom 86 on the maintenance crane. This mechanism is bolted to the base 52 of a mast 54 that, using the cable return device 53, provide the crane boom 86 with the necessary scope to carry out the operations required. The boom 86 lifting system consists of:
- mast 54
- boom lifting drum 55 and
- return device 53.

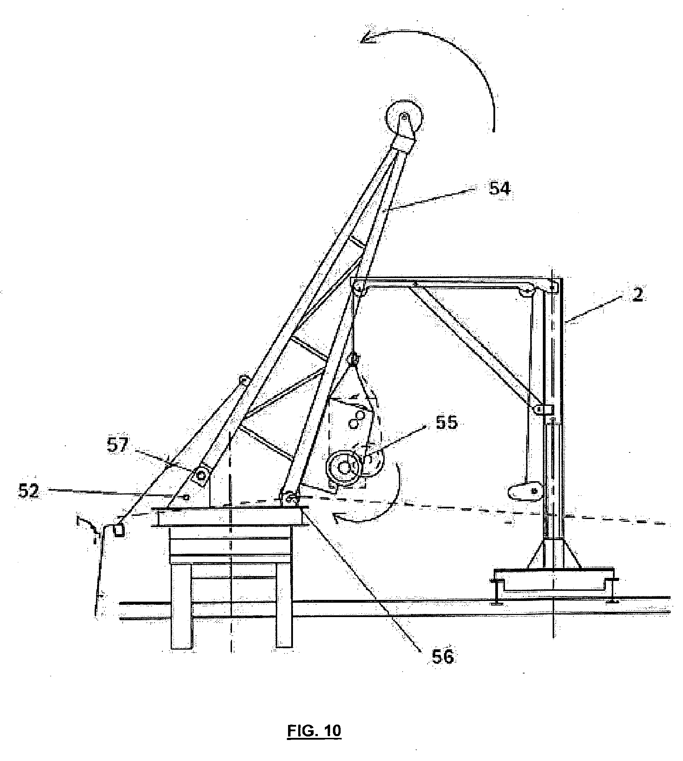

Figure 10 shows the sequence of operations for hoisting the boom on the maintenance crane and is as follows:
- the mast 54 is lifted horizontally using the boom 2 and is then bolted to the securing 56
- the mast 54 is preferably turned using tractels (not shown) anchored to the beams of the nacelle structure 80
- the base of the mast 52 is bolted to the anchoring 57
- the boom lifting drum 55 is hoisted using the boom 2 and is secured to the mast 54 and
- the lifting drum 55 is turned to fit in its final position on the mast 54.

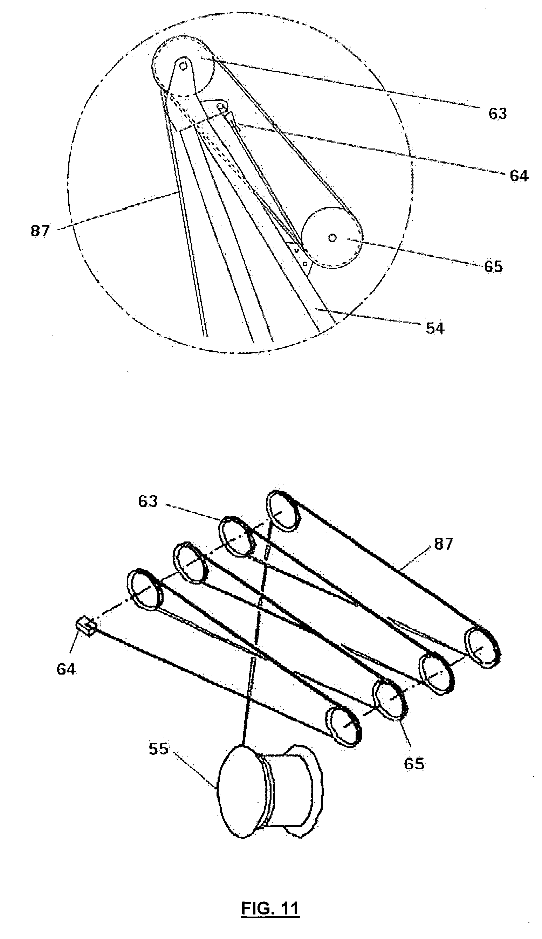

As can be seen in Figure 11, once the mast is secured the pulling cable 87 is returned between the mast pulleys 63 and the roller lever pulleys 65, which are hoisted at the same time as the mast 54 and are secured to it. The pulling cable 87 is secured after passing one end 64 through the mast pulleys 63 and the roller lever pulleys 65. The returns must be made by a worker.

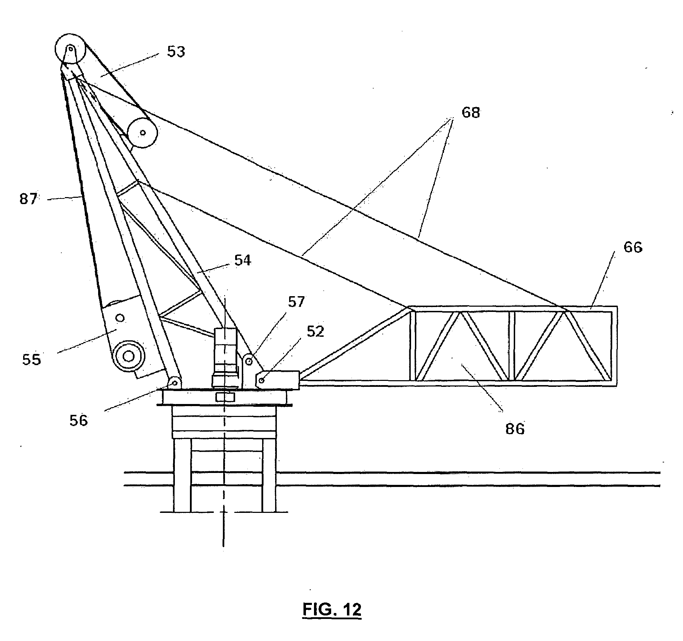

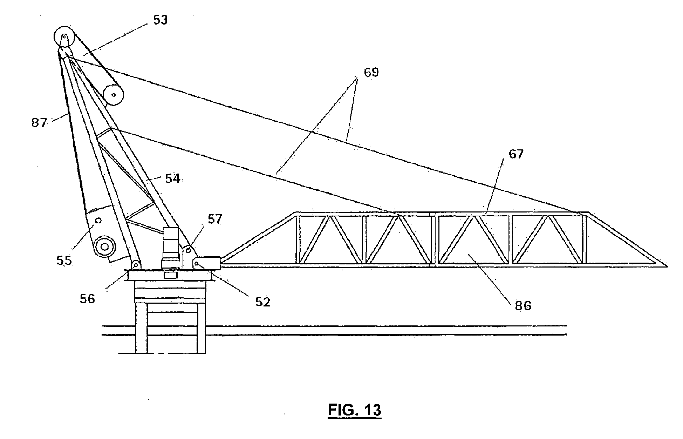

As can be seen in Figures 12 and 13, the maintenance crane boom 86 is divided in two sections 66 and 67, mounted individually and screwed together. Each piece of the boom is assembled using the auxiliary boom 2, according to the following sequence: hoist the component, turn on the nacelle 80 and place the component in its position. In the case of piece 67 of the boom, due to space the turn on the nacelle is made on the outside.

Part 66 of the boom, once bolted to the mast 54, is tied to the mast 54 using the cable 68 to keep it horizontal.

Part 67 of the boom is tied to the mast 54 using the cable 69 and the boom 86 is then ready for the assembly of the roller level and for returns for load hoisting.

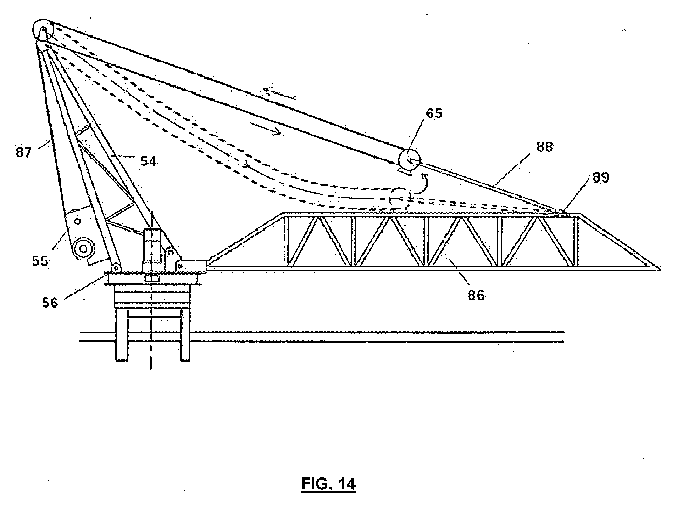

As seen in Figure 14, the pulling cable 87 is assembled in the following sequence:
- a rope 88 is tied to the roller lever 65 and it is brought closer, pulling on the rope 88 before being bolted to the tie 89 on the boom 86
- the pulling cable 87 is then tightened.

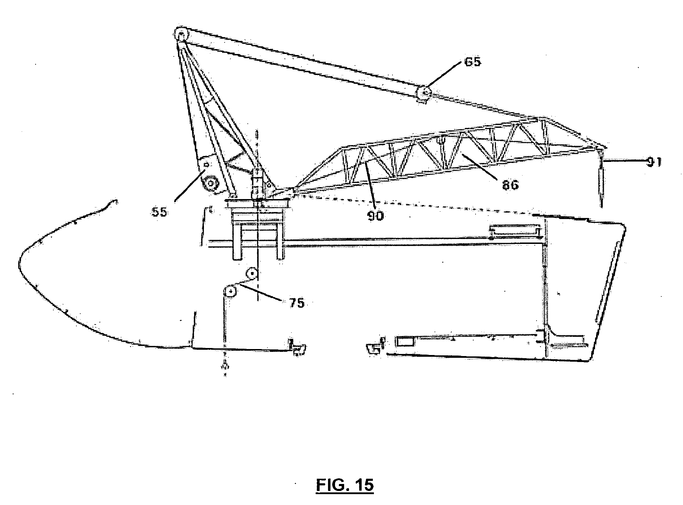

The load lifting system is assembled as indicated in Figure 15 and consists of the following operations:
- a rope 90 is threaded through pulleys 75, 55 and 53 on the boom 86 and is lowered to the load lifting drum 75 located at the base of the wind turbine tower
- this rope 90 is then tied to the drum cable 75 and is pulled until the cable is lifted to the boom 86 and
- the hook 91 is lifted with the crane and the returns are made.

Having described the auxiliary boom and the maintenance crane, below is a description of the assembly operations and handling required to complete the full assembly process for the aforementioned wind turbine maintenance crane.

The basic operations to be carried out to assemble the wind turbine maintenance crane are:
- removal of the outer casing 15 of the nacelle 80
- positioning of the crane support 50
- positioning of the bearing with crown 83
- positioning of the turning platform 85
- positioning of the mast 54
- assembly of the turning system 106 and the cable rewind system 55 for pulling the boom 86
- positioning of the first part 66 of the boom 86
- positioning of the second part 67 of the boom 86 and
- assembly of the pulling system 53.

Once the casing 15 has been removed from the nacelle 80 on the wind turbine using the boom 2, the base 50 of the crane is mounted using the auxiliary boom 2, fitted to the rear of the nacelle 80, which lifts the base 50 and turns it to free it from the casing. When the base 50 is on the nacelle 80, the overhead crane 1 is pushed until the base 50 is fitted on the legs 51 to which it is bolted as can be seen in Figure 6.

The crane turning system is then mounted using the boom 2:
- an adaptor 82 housing the bearing with crown 83 is screwed to the base 50 and
- the turning platform 85 where the mast 54, the pulling system drum 55 and the gear motor with brake 106 are housed is then mounted.

Once the turning platform 85 has been mounted, the crane structure itself is mounted. This begins by positioning the mast 54, which is hoisted horizontally and, once two of its legs have been fitted to the platform 85, the mast 54 is positioned vertically.

Once the mast 54 is in position, the different components housed on the turning platform 85 and the support 50 are mounted: guide pulley 84, geared motor and brake unit 106 and pulling system drum 55.

The first part 66 of the crane boom 86 is then positioned, securing this first part of lattice 66 using the boom 2 and making sure it remains horizontal using crossbeams 110 located on the overhead crane 1. The second part 67 of the crane is then positioned, which is mounted in the same way as that described for the part 66.

Finally, the pulling system 53 is mounted to be able to suspend the boom 86 and remove the crossbeams 110 where it is supported horizontally to enable the overhead crane 1 to move underneath the boom and obtain the necessary space to hoist the last part 108 with the help of the auxiliary boom 2.

In the preferential operations described, any modifications included within the scope defined by the following claims can be introduced.

## Claims

1. Wind turbine, comprising: - a tower - a nacelle (80), which hoists a gearbox (92) and a generator (93) driven by a shaft coupled to a blade (95) of the rotor (94) that also hoists a transformer (96) and that is structured on a supporting frame (97), an overhead crane (1) located over the aforementioned parts and casing (15); - a detachable, articulated boom-type crane to maintain the gearbox (92), the generator (93), the blades (95) of the rotor (94) and the transformer (96), made up of a support (50), a boom (86), a mast (54), a boom lifting drum (56), a pulley (63, 65) device (53) and cables (87) to adjust the boom hoisting (86), a load lifting / lowering cable (98) driven by a motor unit located at the base of the tower, **characterised by**: a) the crane is anchored at the end (99) of the frame (97) close to the rotor (94) and its boom (86) is sized to be able to cover the entire surface of the nacelle (80) b) the crane support (50) includes a turning device c) all the crane components mounted on the nacelle (80) weigh less than 700 Kg.

2. Wind turbine according to Claim 1, **characterised by** it also includes a detachable auxiliary boom (2) to lift and lower all the crane components mounted on the nacelle (80).

3. Wind turbine according to Claim 2, **characterised by** the auxiliary boom is mounted on the overhead crane (1) of the wind turbine so that it can move lengthways along it.

4. Wind turbine according to Claim 1, **characterised by** the turning device of crane support (50) includes a bearing with crown (83), a guide pulley (84), a turning platform (85) mounted on the bearing with crown (83) and a geared motor and brake unit (106) that drives the aforementioned crown (83).

5. Wind turbine maintenance crane assembly procedure according to Claims 1-4, **characterised by** it includes the following steps: positioning of the crane support (50) positioning of the crane support (50) turning system positioning of the mast (54) positioning of the first part (66) of the boom (86) positioning of the second part (67) of the boom (86) and assembly of the pulling system (53).
